# EUROPEAN PATENT SPECIFICATION

(11) **EP 0 455 122 B1**
(45) Date of publication and mention of the grant of the patent: **05.07.1995**
(21) Application number: 91106577.9
(22) Date of filing: 24.04.1991
(51) Int. Cl.: H02K 3/487, H02K 15/06

(54) **Stator wedge and guide jig therefor**
Nutenverschlusskeil und Einsetzhilfe dafür
Cale d'encoche et guide d'insertion

(30) Priority: 26.04.1990 JP 108639/90
(43) Date of publication of application: 06.11.1991
(73) Proprietor: MITSUBISHI DENKI KABUSHIKI KAISHA, Tokyo (JP)
(72) Inventor: Taji, Ryoichi, c/o Mitsubishi Denki K.K., Himeji-shi, Hyogo-ken (JP); Takizawa, Takushi, c/o Mitsubishi Denki K.K., Himeji-shi, Hyogo-ken (JP)
(74) Representative: Lehn, Werner, Dipl.-Ing.

(56) References cited:
- WO-A-84/01476
- GB-A- 2 096 497
- JP-A-62 147 932

## Description

### BACKGROUND OF THE INVENTION

This invention relates to a wedge of a stator for a vehicular a.c. generator for example and guide jig for guiding the wedge into the radially inner side of the slots.

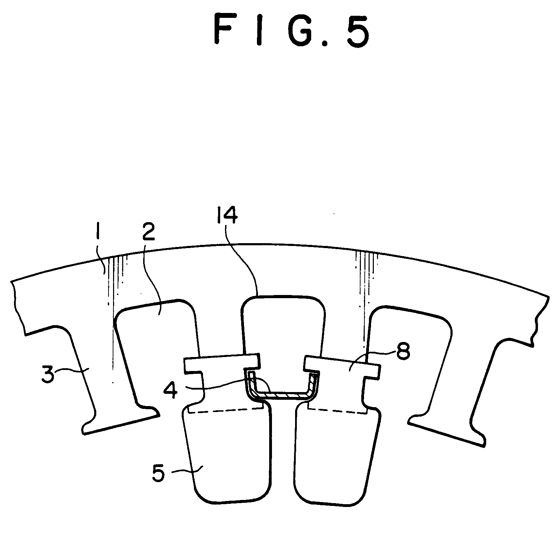

Fig. 5 is a sectional view of the main portion of a conventional stator of a vehicular ac generator as known from JP 62-147932, in which 1 is a stator core, 2 are a plurality of slots formed in the inner circumference of the core 1 at equal intervals, 3 are teeth formed between the slots 2, 4 is a U-shaped wedge attached to each slot 2 and 5 are guide jigs used for inserting the coil and wedge 4 within the slots 2.

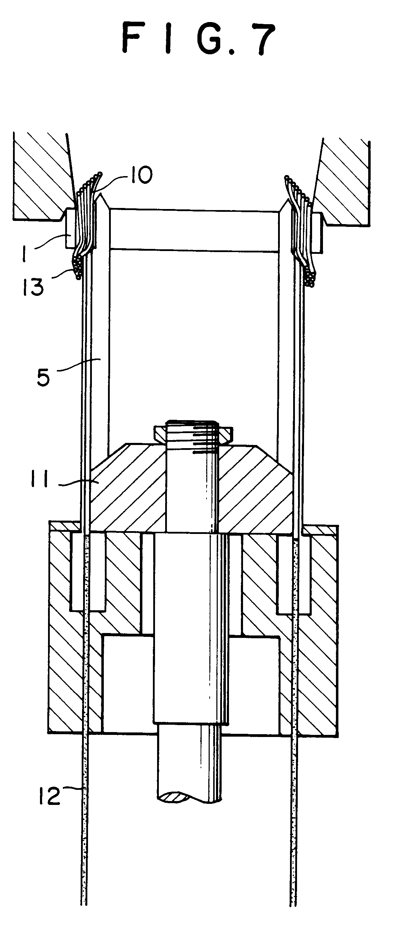

Fig. 6 is a perspective view of the guide jig 5, in which 6 is a inner-diameter receiving portion formed in the tip portion of the guide jig 5 and for abutting to the radially inner portion of the core 1, 7 is an end face receiving portion for abutting to an end surface of the core 1, 8 is a wedge guide formed on one side of the guide jig 5 and having a T-shaped cross-section, and 9 is a groove formed on both sides of the wedge guide 8.

Fig. 7 is a sectional view illustrating the state after a coil 10 is inserted into the slots 2 through the use of the guide jig 5, wherein the coil 10 is inserted into the slots 2 by first winding conductor into a ring of necessary number of turns, and then mounting a coil unit, which was formed into a configuration having radial projections and grooves of numbers corresponding to the pole number, into the guide jig 5. The U-shaped wedges 4 are also inserted into the grooves 9. In this state, by pressing the inside of the coil unit with a coil presser 11 and the wedges 4 with a wedge presser 12, the coil 10 and the wedges 4 are concurrently inserted into the slots 2.

The wedge 4 of the conventional stator constructed as above described is disposed within the slot 2 in the shape of a "U", so that the space factor of the coil 10 relative to the slots 2 is disadvantageously low.

Also, the convention guide jig is arranged to guide the wedge 4 with its entirety wrapped by the wedge guide 8 and the wedge guide 8 projects to the slots 2 and the teeth 3 as illustrated in Fig. 5, so that the rear coil end portions 13 are caught and clamped within a gap between a core back 14 and the wedge guide 8, causing the insulating coating on the coil 10 and the core 1 to be damaged.

### SUMMARY OF THE INVENTION

The first invention of this application has been made to solve the above problems and has as its object the provision of a stator wedge which improves the space factor of the coil relative to the slots.

According to the invention, this object is solved by a stator wedge for disposing at an inner diameter side of a slot formed between adjacent inwardly projecting, flared-ended teeth of a ring shaped core with the wedge engaging the flared ends of the teeth to retain a coil in the slot, characterized in that said wedge has stepped recesses in two opposite sides to provide therebetween a portion having a dovetail cross-section for mounting the wedge to a pair of adjacent guiding jigs.

The second invention of this application has as its object the provision of a guide jig which can smoothly insert the coil into the slots.

According to the invention, this object is solved by a guide jig for guiding a pre-wound coil and a wedge into an inner diameter side of a slot formed between adjacent inwardly projecting, flared-ended teeth of a ring shaped core with the wedge engaging the flared ends of the teeth to retain a coil in the slot, characterized that said guide jig has an edge portion formed on both side surfaces for engaging a dovetail portion of said wedge between two adjacent guide jigs.

The stator wedge of the first invention has a dove-tail cross section and disposed at a radially inner side of each of a plurality of slots formed in a ring-shaped core and having a coil inserted therein.

The guide jig of the second invention has an edge portion engageable by a wedge formed on both side surfaces of the jig.

According to the first invention of the present application, the wedge of the dove-tail cross section is disposed at a radially inner side of each slot, the space factor of the coil relative to the slots is improved.

According to the second invention of the present application, the edge portion engageable by the wedge is formed on both side surfaces, the guide jig cannot be an obstacle for the insertion of the coil into the slots.

### BRIEF DESCRIPTION OF THE DRAWINGS

The present invention will become more readily apparent from the following detailed description of the preferred embodiment of the present invention taken in conjunction with the accompanying drawings, in which:
Fig. 1 is a sectional view of the main portion of one embodiment of the first invention of the present invention;
Fig. 2 is an overall perspective view of the wedge illustrated in Fig. 1;
Fig. 3 is an overall perspective view illustrating one embodiment of the second invention of the present invention;
Fig. 4 is a view illustrating the state in which the coil is inserted into the slots by means of the guide jig illustrated in Fig. 3;
Fig. 5 is a sectional view of the main portion illustrating one example of a conventional stator of a vehicular ac generator;
Fig. 6 is an overall perspective view illustrating one example of a conventional guide jig; and
Fig. 7 is a view illustrating the state in which the coil is inserted into the slots by means of the guide jig illustrated in Fig. 6.

### DESCRIPTION OF THE PREFERRED EMBODIMENTS

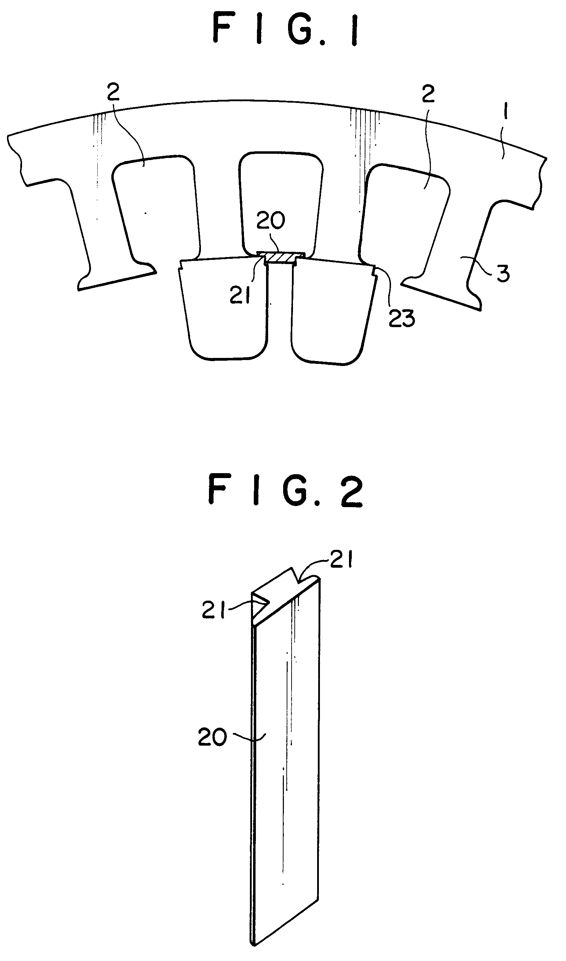

An embodiment of the present invention will now be described in conjunction with the drawings. Fig. 1 is a sectional view of the main portion of a stator wedge of a vehicular ac generator of one embodiment of the first invention, and the illustrated components the same as or corresponding to those illustrated in Figs. 5 to 7 are designated by the same reference numerals and their descriptions are omitted.

In the figure, 20 is a wedge mounted to the slot 2 which as illustrated in Fig. 2 has a stepped recess 21 in opposite sides of the wedge 20 to have a dove-tail cross section as illustrated in Fig. 2.

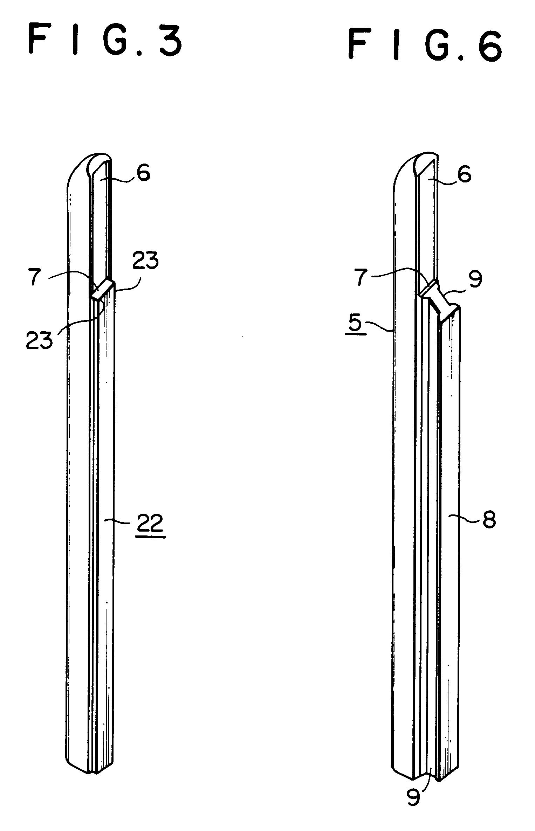

Fig. 3 is a perspective view of a guide jig 22 of one embodiment of the second invention, wherein 23 is an edge portion formed at both sides of the guide jig 22 and adapted to engage with the recess 21 of the wedge 20.

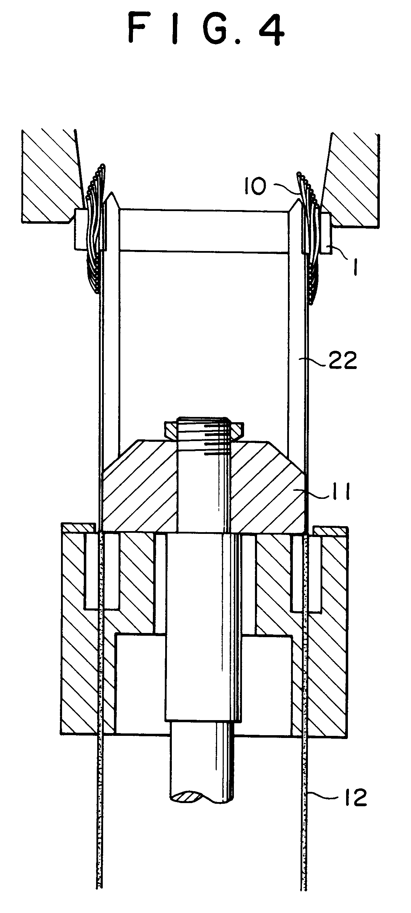

Fig. 4 is a sectional view illustrating the state in which the coil 10 is inserted into the slots 2 by the guide jig 22. In order to insert the coil 10 into the slot 2, a length of electrical conductor is wound into a ring of a necessary number of turn, and the wound ring is formed into the coil unit having the radial projections and grooves of a number corresponding to the number of poles, and this unit is disposed within the guide jig 22. Also, the edge portions 23 are engaged with the recess portions 21 so that the dove-tailed wedge 20 is mounted to the guide jig 22. From this state, the coil 10 and the wedge 20 are concurrently inserted into the slots 2 by pushing the inner side of the coil unit by the coil pusher 11 and the wedge 20 by the wedge pusher 12.

While the above embodiment has been described in terms of the stator wedge of a vehicular ac generator, the present invention can be equally applied to a stator wedge of another ac generator for other than vehicles.

As has been described above, in the stator wedge of the first invention, the wedge of the dove-tail cross section is disposed at the radially inner side of the slot, so that the space factor of the coil relative to the slots can be advantageously improved.

Also, in the guide jig of the second invention, the jig has formed at both sides thereof edges engaged by the dove-tail wedge, so that the coil can be smoothly inserted into the slots and the insulating coatings of the coil and the core cannot be damaged.

## Claims

1. A stator wedge (20) for disposing at an inner diameter side of a slot (2) formed between adjacent inwardly projecting, flared-ended teeth (3) of a ring shaped core (1) with the wedge (20) engaging the flared ends of the teeth (3) to retain a coil (10) in the slot (2),
**characterized in that** said wedge (20) has stepped recesses (21) in two opposite sides to provide therebetween a portion having a dovetail cross-section for mounting the wedge to a pair of adjacent guiding jigs.

2. A guide jig (22) for guiding a pre-wound coil and a wedge (20) into an inner diameter side of a slot (2) formed between adjacent inwardly projecting, flared-ended teeth (3) of a ring shaped core (1) with the wedge (20) engaging the flared ends of the teeth (3) to retain a coil (10) in the slot,
**characterized in that** said guide jig (22) has an edge portion (23) formed on both side surfaces for engaging a dovetail portion of said wedge (20) between two adjacent guide jigs.

## Patentansprüche

1. Statorkeil (20), der an einer Seite des inneren Durchmessers eines Schlitzes (2) anzuordnen ist, der zwischen benachbarten nach innen vorstehenden Zähnen (3) mit ausgestellten Enden eines ringförmigen Kerns (1) ausgebildet ist, wobei der Keil (20) mit den ausgestellten Enden der Zähne (3) in Eingriff steht, um eine Spule (10) in dem Schlitz (2) zu halten,
**dadurch gekennzeichnet**, daß der Keil (20) in zwei gegenüberliegenden Seiten gestufte Aussparungen (21) aufweist, um dazwischen einen Teil zu schaffen, der einen Schwalbenschwanz-Querschnitt hat, um den Keil an einem Paar benachbarter Führungsvorrichtungen anzubringen.

2. Führungsvorrichtung (22) zum Führen einer vorgewickelten Spule und eines Keils (20) in eine Seite des inneren Durchmessers eines Schlitzes (2), der zwischen benachbarten nach innen vorstehenden Zähnen (3) mit ausgestellten Enden eines ringförmigen Kerns (1) ausgebildet ist, wobei der Keil (20) mit den ausgestellten Enden der Zähne (3) in Eingriff steht, um eine Spule (10) in dem Schlitz zu halten,
**dadurch gekennzeichnet**, daß die Führungsvorrichtung (22) einen Kantenteil (23) aufweist, der an beiden Seitenoberflächen ausgebildet ist, damit er mit einem Schwalbenschwanz-Teil des Keils (20) zwischen zwei benachbarten Führungsvorrichtungen in Eingriff steht.

## Revendications

1. Cale de stator (20) prévue pour être disposée à un côté de diamètre intérieur d'une fente (2) ménagée entre des dents adjacentes (3) à extrémité évasée, faisant saillie vers l'intérieur d'un noyau annulaire (1), la cale (20) étant mise en prise avec les extrémités évasées des dents (3) afin de retenir une bobine (10) dans la fente (2), caractérisée en ce que ladite cale (20) présente des évidements étagés (21) dans deux côtés opposés afin de réaliser entre ceux-ci une partie ayant une section en queue d'aronde pour monter la cale sur une paire de guides d'insertion adjacents.

2. Guide d'insertion (22) pour guider une bobine enroulée préalablement et une cale (20) dans un côté de diamètre intérieur d'une fente (2) ménagée entre des dents adjacentes (3) à extrémité évasée, faisant saillie vers l'intérieur d'un noyau annulaire (1), la cale (20) étant mise en prise avec les extrémités évasées des dents (3) afin de retenir une bobine (10) dans la fente, caractérisé en ce que ledit guide d'insertion (22) comporte une partie de bord (23) formée sur les deux surfaces latérales pour la mise en prise avec une partie en queue d'aronde de ladite cale (20) entre deux guides d'insertion adjacents.
